# EUROPEAN PATENT SPECIFICATION

(11) **EP 3 355 480 B1**
(45) Date of publication and mention of the grant of the patent: **15.07.2020**
(21) Application number: 15910095.7
(22) Date of filing: 11.12.2015
(51) Int. Cl.: H04B 1/74, H04L 12/24, H04L 12/939, G06F 11/07, G06F 11/20

(54) **COMMUNICATION DEVICE, COMMUNICATION PROCESSING METHOD, COMMUNICATION PROCESSING APPARATUS AND COMMUNICATION SYSTEM**
KOMMUNIKATIONSVORRICHTUNG, KOMMUNIKATIONSVERARBEITUNGSVERFAHREN, KOMMUNIKATIONSVERARBEITUNGSVORRICHTUNG UND KOMMUNIKATIONSSYSTEM
DISPOSITIF DE COMMUNICATION, PROCÉDÉ DE TRAITEMENT DE COMMUNICATION, APPAREIL DE TRAITEMENT DE COMMUNICATION ET SYSTÈME DE COMMUNICATION

(43) Date of publication of application: 01.08.2018
(73) Proprietor: Huawei Technologies Co., Ltd., Longgang District Shenzhen, Guangdong 518129 (CN)
(72) Inventor: QIU, Xiaodong, Shenzhen Guangdong 518129 (CN); LIN, Liankui, Shenzhen Guangdong 518129 (CN)
(74) Representative: Gill Jennings & Every LLP
(86) International application number: PCT/CN2015/097166
(87) International publication number: WO 2017/096621

(56) References cited:
- CN-A- 1 725 661
- CN-A- 1 753 376
- CN-A- 1 859 022
- CN-A- 101 710 865
- CN-A- 103 490 931
- US-A1- 2014 156 886
- US-B1- 7 417 947
- US-B1- 9 049 256

## Description

### TECHNICAL FIELD

The present invention relates to the field of communications technologies, and in particular, to a communications device, a communication processing method, a communication processing apparatus, and a communications system.

### BACKGROUND

As communications technologies develop, rack communications devices are widely applied to communications networks.

A management and control processing unit (MCU), a fabric unit (FU), and an uplink service forwarding unit (SFU) are integrated on a physical main control board of a rack communications device. The MCU has management and control functions, and may control the FU and the SFU. Therefore, in-service software upgrade (ISSU) usually needs to be performed on the MCU. An MCU fault or reset occurs sometimes. In an ISSU process, when the MCU encounters a fault or is reset, a service packet loss usually occurs if a service volume is relatively large. Consequently, normal operation of a communication service is affected.

US 9,049,256 relates to fabric switchover for systems with control plane and fabric plane on same board. US 2014/0156886 relates to data migration method and apparatus.

### SUMMARY

The present disclosure provides a solution to alleviate a service packet loss when an MCU encounters a fault or is reset in an ISSU process.

Various aspects of the present disclosure have been defined in the independent claims. Further technical features of each of these aspects have been defined in the respective dependent claims.

The communications device includes at least two integrated main control boards. An MCU and a hardware forwarding unit are integrated on each of the integrated main control boards, and the hardware forwarding unit includes an FU and an SFU. A control signal exchange path is provided between the MCU on each integrated main control board and a hardware forwarding unit on another integrated main control board in the at least two integrated main control boards. Therefore, an MCU on any one of the at least two integrated main control boards can control an FU and an SFU on the another integrated main control board in the at least two integrated main control boards by using the control signal exchange path. In this way, if an MCU on an integrated main control board encounters a fault or is reset, and ISSU is performed on an MCU on an integrated main control board, an integrated main control board on which an MCU works normally may take over to control an FU and an SFU on the integrated main control board on which the MCU encounters a fault or is reset and ISSU is performed on the MCU, thereby avoiding a problem that an MCU fault or reset and ISSU affect an FU and an SFU, and consequently a forwarding capability is reduced by half and a service packet loss is caused.

The selector is provided so that according to an actual application scenario, the FU and the SFU may choose to be controlled by an MCU on the integrated main control board on which the FU and the SFU are integrated, or choose to be controlled by an MCU on another integrated main control board.

The selector is provided so that the MCU may choose, according to an actual application scenario, to control the FU and SFU on the another integrated main control board. Therefore, the MCU may control only an FU and an SFU on the integrated main control board on which the MCU is integrated, or the MCU may control both an FU and an SFU on the integrated main control board on which the MCU is integrated, and the FU and the SFU on the another integrated main control board.

Optionally, the selector is a selector switch. The control signal exchange path is a control bus. The present invention can avoid a problem that an MCU fault or reset and ISSU affect an FU and an SFU, and consequently a forwarding capability is reduced by half and a service packet loss is caused.

### BRIEF DESCRIPTION OF DRAWINGS

FIG. 1 is a schematic structural diagram of an existing rack communications device;
FIG. 2 is a schematic structural diagram of a rack communications device according to an embodiment of the present invention;
FIG. 3 is a schematic structural diagram of another rack communications device according to an embodiment of the present invention;
FIG. 4 is a schematic diagram of a communication processing process when integrated main control boards that serve as a primary integrated main control board and a secondary integrated main control board are in a normal working state according to an embodiment of the present invention;
FIG. 5 is a flowchart of a communication processing method according to an embodiment of the present invention;
FIG. 6 is a schematic diagram of a communication process when a secondary integrated main control board encounters a fault according to an embodiment of the present invention;
FIG. 7 is a schematic diagram of a communication process after a secondary integrated main control board restores normal working according to an embodiment of the present invention;
FIG. 8A and FIG. 8B are schematic structural diagrams of a communication processing apparatus according to an embodiment of the present invention;
FIG. 9 is a schematic structural diagram of another communication processing apparatus according to an embodiment of the present invention; and
FIG. 10 is a schematic composition diagram of a communications system according to an embodiment of the present invention.

### DESCRIPTION OF EMBODIMENTS

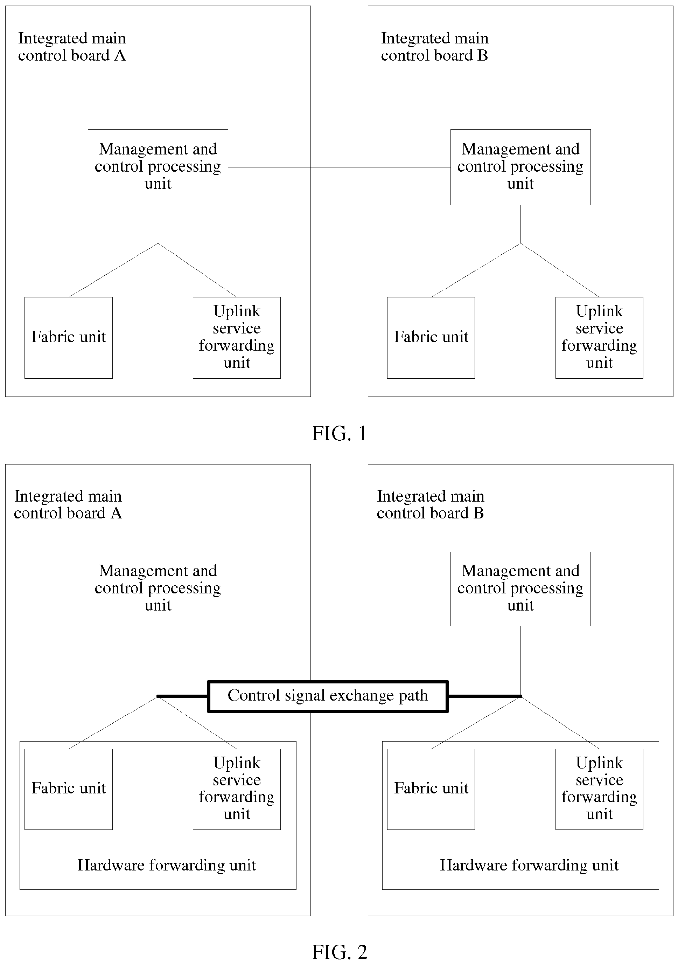

The following clearly describes the technical solutions in the embodiments of the present invention with reference to the accompanying drawings in the embodiments of the present invention. Currently, an architecture shown in FIG. 1 is usually used for a rack communications system. The rack communications system includes two or more integrated main control boards. Two integrated main control boards are used as an example in FIG. 1 for description. In the embodiments of the present invention, the two integrated main control boards serve as a primary integrated main control board and a secondary integrated main control board. That is, the two integrated main control boards include a primary integrated main control board and a secondary integrated main control board. A management and control processing unit (MCU), a fabric unit (FU), and an uplink service forwarding unit (SFU) are integrated on each integrated main control board. The MCU on each integrated main control board manages and controls an FU and an SFU on the integrated main control board on which the MCU is located. In the foregoing manner of integrating the MCU, the FU, and the SFU on an integrated main control board, if an ISSU process, an MCU fault, or an MCU reset occurs, the entire physical main control board on which the MCU, the FU, and the SFU are integrated needs to be reset. Consequently, the FU and the SFU on a forwarding plane on the physical main control board also stop working. A forwarding service can be restored only after the MCU restores and completes related configurations. In a period of time in which the forwarding service is restored, a connected service can be forwarded only by using an FU and an SFU on another integrated main control board. Therefore, a forwarding capability is deteriorated. In addition, when a service volume is relatively large and exceeds a forwarding capability of the FU and the SFU on the another integrated main control board, a service packet loss occurs. Considering the foregoing problem, in the following embodiments, a control signal exchange path is added between the primary integrated main control board and the secondary integrated main control board. In this way, the MCU on each integrated main control board may control an FU and an SFU on another integrated main control board by using the control signal exchange path, so as to resolve the problem that an MCU fault or reset and ISSU affect an FU and an SFU, and consequently a forwarding capability is reduced by half and a service packet loss is caused. FIG. 2 is a schematic structural diagram of a communications device according to an embodiment of the present invention. As shown in FIG. 2, the communications device includes an integrated main control board A and an integrated main control board B. Optionally, the integrated main control board A and the integrated main control board B may be integrated main control boards that serve as a primary integrated main control board and a secondary integrated main control board. An MCU and a hardware forwarding unit are integrated on both the integrated main control board A and the integrated main control board B. The hardware forwarding unit includes an FU and an SFU. A control signal exchange path is provided between the MCU on either integrated main control board and a hardware forwarding unit on the other integrated main control board. The MCU on either integrated main control board can control an FU and an SFU on the other integrated main control board by using the control signal exchange path.

It should be noted that, as shown in FIG. 2, in this embodiment of the present invention, an example in which the communications device includes two integrated main control boards is used for description. In an actual application, the communications device may include more than two integrated main control boards. That is, the communications device provided in this embodiment of the present invention includes at least two integrated main control boards. An MCU, an FU, and an SFU are integrated on each of the integrated main control boards. A control signal exchange path is provided between the MCU on each integrated main control board and a hardware forwarding unit on another integrated main control board in the at least two integrated main control boards. An MCU on any one of the at least two integrated main control boards controls an FU and an SFU on the another integrated main control board in the at least two integrated main control boards by using the control signal exchange path.

In this embodiment of the present invention, the control signal exchange path is provided between the integrated main control boards, so that an MCU on any integrated main control board not only can manage an FU and an SFU integrated on the integrated main control board on which the MCU is located, but also can manage an FU and an SFU on another integrated main control board. Therefore, when an MCU fault or reset or an ISSU process occurs on an integrated main control board of the communications device including the at least two integrated main control boards, an MCU on another integrated main control board may manage and control an FU and an SFU on the integrated main control board on which the MCU fault or reset or the ISSU process occurs, so as to maintain a normal forwarding capability of the FU and the SFU on the integrated main control board on which the MCU fault or reset or the ISSU process occurs, and avoid a service packet loss caused by an insufficient forwarding capability.

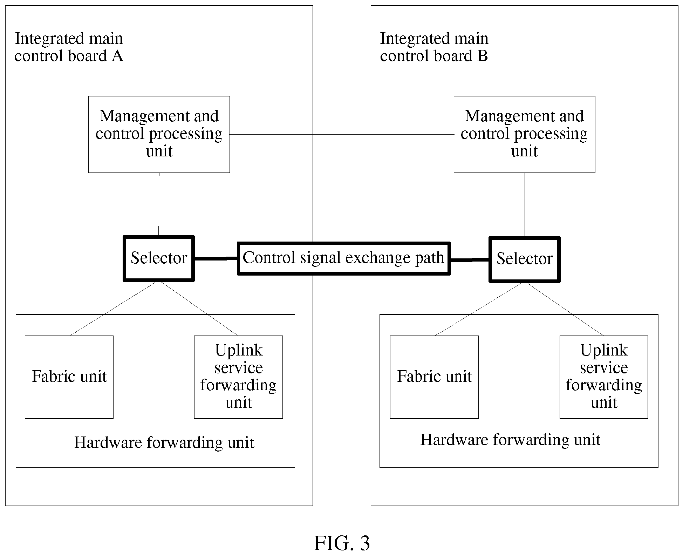

FIG. 3 is a schematic structural diagram of another rack communications device according to an embodiment of the present invention. As shown in FIG. 3, in this embodiment of the present invention, a selector may further be provided on each integrated main control board, so that by means of the selector, an FU and an SFU on each integrated main control board may choose to be controlled by an MCU on the integrated main control board on which the FU and the SFU are integrated, or choose to be controlled by an MCU on another integrated main control board by using the control signal exchange path. That is, the FU and the SFU on each integrated main control board can be managed and controlled only by the MCU on the integrated main control board on which the FU and the SFU are integrated or by the MCU on the another integrated main control board at a time. However, the MCU on each integrated main control board may control only an FU and an SFU on the integrated main control board on which the MCU is integrated, or may control both an FU and an SFU on the integrated main control board on which the MCU is integrated, and an FU and an SFU on another integrated main control board.

In this embodiment of the present invention, when a selector is provided on an integrated main control board, an FU and an SFU on the integrated main control board may exchange information with an MCU on another integrated main control board by using the control signal exchange path. The FU and the SFU on the integrated main control board actively choose, by using the selector, to be controlled by using the control signal exchange path by the MCU on the another integrated main control board different from the integrated main control board on which the FU and the SFU are integrated. Certainly, alternatively, an MCU on any one of the at least two integrated main control boards may configure a selector on another integrated main control board in the at least two integrated main control boards, to choose to control, by using the control signal exchange path, an FU and an SFU on the another integrated main control board in the at least two integrated main control boards.

In this embodiment of the present invention, a selector is provided on an integrated main control board, so that an FU and an SFU on the integrated main control board can be managed and controlled only by an MCU on the integrated main control board on which the FU and the SFU are integrated or by an MCU on another integrated main control board at a time. Therefore, when the MCU on the integrated main control board on which the FU and the SFU are integrated is normal, the MCU on the integrated main control board on which the FU and the SFU are integrated can manage and control the FU and the SFU on the current board. When the MCU on the integrated main control board on which the FU and the SFU are integrated is abnormal, the MCU on the another integrated main control board can manage and control the FU and the SFU on the current board. A specific integrated main control board whose MCU performs management and control may be negotiated and determined according to a specific service scenario.

During specific implementation of this embodiment of the present invention, the control signal exchange path may be a control bus, and the selector may be a selector switch.

It should be noted that, in the foregoing embodiments of the present invention, only a difference between the rack communications device in the embodiments of the present invention and an existing rack communications device is described, and specific composition of the rack communications device is not limited. For example, an inter-board synchronization path for data synchronization is further provided between a primary integrated main control board and a secondary integrated main control board, and details are not described in the embodiments of the present invention.

In the following embodiment of the present invention, a communication process performed by the rack communications device in the foregoing embodiments of the present invention is described in detail.

In this embodiment of the present invention, an example in which the rack communications device includes a primary integrated main control board and a secondary integrated main control board is used for description.

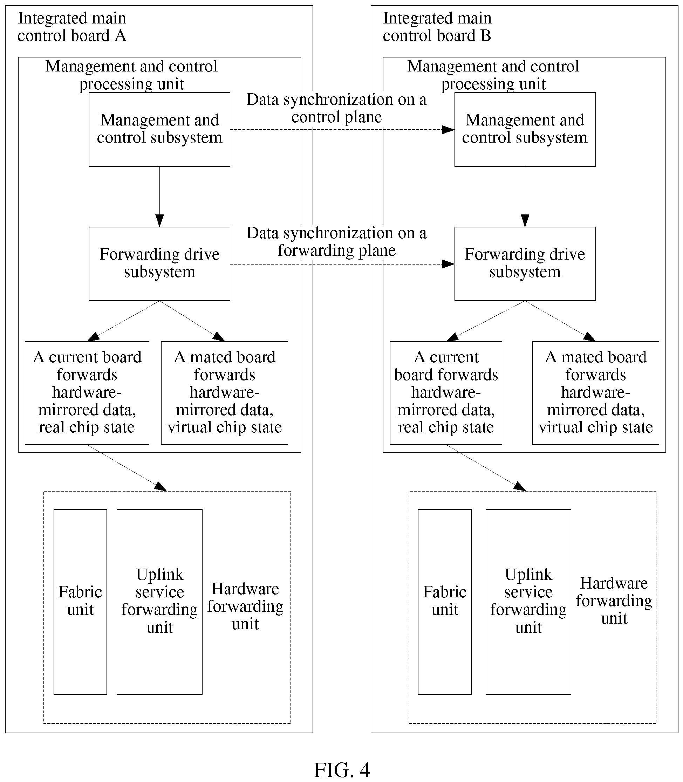

FIG. 4 is a schematic diagram of a working status when both MCUs on a primary integrated main control board and a secondary integrated main control board are in a normal working state. As shown in FIG. 4, the MCUs on the primary integrated main control board and the secondary integrated main control board each include a management and control subsystem and a forwarding drive subsystem in terms of software implementation. The management and control subsystem is mainly configured to perform data synchronization on a control plane between the primary integrated main control board and the secondary integrated main control board. The forwarding drive subsystem is mainly configured to perform data synchronization on a forwarding plane between the primary integrated main control board and the secondary integrated main control board. When the MCUs on the primary integrated main control board and the secondary integrated main control board are in the normal working state, the management and control subsystem of the MCU on the primary integrated main control board is responsible for managing and generating resources and entry data on the forwarding plane, and synchronizing the resources and the entry data to the secondary integrated main control board by using an inter-board synchronization path. The forwarding drive subsystems of the MCUs on the primary integrated main control board and the secondary integrated main control board separately configure hardware configuration data of hardware forwarding units (FUs and SFUs).

It should be emphasized that, in this embodiment of the present invention, when an MCU on an integrated main control board is abnormal, to enable an MCU on another integrated main control board to control and manage an FU and an SFU on the integrated main control board on which the MCU is abnormal, each of the MCUs on the primary integrated main control board and the secondary integrated main control board not only needs to store hardware configuration data of an FU and an SFU on an integrated main control board on which the MCU is integrated, but also needs to store hardware configuration data of an FU and an SFU on another integrated main control board. In this embodiment of the present invention, preferably, the hardware configuration data of the FU and the SFU on the another integrated main control board is pre-stored in a form of a mirror table. Further, the forwarding drive subsystem of the MCU is further configured to maintain a chip status of a hardware forwarding unit (an FU and an SFU). The chip status represents a state machine of the hardware forwarding unit, and includes a real chip state and a virtual chip state. The real chip state represents that the current MCU controls the hardware forwarding unit. In this case, the MCU needs to send corresponding hardware configuration data to the hardware forwarding unit, and store the corresponding hardware configuration data in a mirror database for hardware configuration data in a main memory. The virtual chip state represents that the current MCU does not control the hardware forwarding unit. In this case, the MCU does not need to send corresponding hardware configuration data to the hardware forwarding unit, and only needs to store the corresponding hardware configuration data in a mirror database for hardware configuration data in a main memory. Therefore, when each of the MCUs on the primary integrated main control board and the secondary integrated main control board is in a normal working state, a chip status of a hardware forwarding unit on an integrated main control board on which the MCU is integrated is the real chip state, and a chip status of a hardware forwarding unit on another integrated main control board is the virtual chip state.

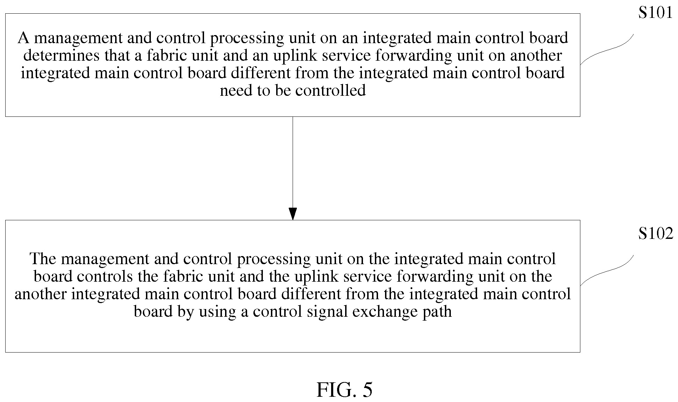

In this embodiment of the present invention, a control signal exchange path is provided between the primary integrated main control board and the secondary integrated main control board. The control signal exchange path is provided between an MCU on each integrated main control board and a hardware forwarding unit on another integrated main control board different from the integrated main control board. The hardware forwarding unit includes the FU and the SFU. Therefore, a communication processing method shown in FIG. 5 may be used in this embodiment of the present invention. As shown in FIG. 5, the method includes the following steps.

S101: An MCU on an integrated main control board determines that an FU and an SFU on another integrated main control board different from the integrated main control board need to be controlled.

Specifically, a control signal exchange path is provided between a primary integrated main control board and a secondary integrated main control board. Therefore, a hardware-based exchange mechanism for a status signal may be added between the primary integrated main control board and the secondary integrated main control board. The status signal is used to represent whether the MCU, the FU, and the SFU are in a normal working state or a fault state.

An MCU in a normal working state detects status signals of an MCU, an FU, and an SFU integrated on another integrated main control board, and determines, by using the status signals, working statuses of the MCU, the FU, and the SFU integrated on the another integrated main control board.

If detecting that the MCU on the another integrated main control board is in a fault state, and that at least one of the FU or the SFU is in a normal working state, the MCU in the normal working state determines that the FU and the SFU that are integrated on the another integrated main control board need to be controlled.

S102: The MCU on the integrated main control board controls the FU and the SFU on the another integrated main control board different from the integrated main control board by using a control signal exchange path.

Specifically, the MCU on the integrated main control board may choose, by using a selector, whether to control the FU and the SFU on the another integrated main control board. In this embodiment of the present invention, if it is detected that the MCU on the another integrated main control board is in a fault state, and that at least one of the FU or the SFU is in a normal working state, the selector may be set to choose to connect to the control signal exchange path, and to control the FU and the SFU that are integrated on the another integrated main control board by using the control signal exchange path.

In this embodiment of the present invention, the MCU on the integrated main control board may control the FU and the SFU that are integrated on the another integrated main control board and that are in the normal working state by using the control signal exchange path in the following two manners:
First manner:
   The MCU in the normal working state configures the selector, chooses, by using the selector, to connect to the control signal exchange path, and controls, by using the control signal exchange path,
   the FU and the SFU that are integrated on the another integrated main control board and that are in the normal working state to clear original hardware configuration data. The MCU in the normal working state sends, by using the control signal exchange path, pre-stored hardware configuration data of the FU and the SFU on the another integrated main control board to the FU and the SFU that are integrated on the another integrated main control board.
Second manner:
   The MCU in the normal working state configures the selector, and chooses, by using the selector, to connect to the control signal exchange path. The MCU in the normal working state obtains, by using the control signal exchange path, original hardware configuration data of the FU and the SFU that are integrated on the another integrated main control board and that are in the normal working state, performs consistency verification on the pre-stored hardware configuration data of the FU and
   the SFU on the another integrated main control board and the original hardware configuration data, and updates original hardware configuration data different from the pre-stored hardware configuration data with reference to the pre-stored hardware configuration data.

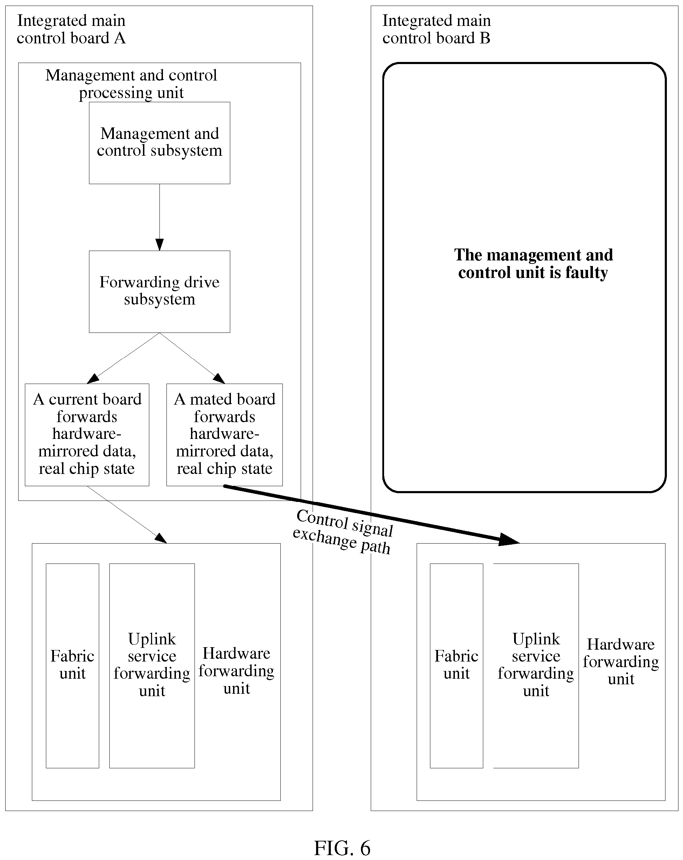

In this embodiment of the present invention, an example in which the MCU on the primary integrated main control board is in a normal working state, and the MCU on the secondary integrated main control board is in an abnormal state is used for description. FIG. 6 is a schematic diagram of a working status when the MCU on the secondary integrated main control board is abnormal. As shown in FIG. 6, when the primary integrated main control board detects that the MCU on the secondary integrated main control board is abnormal, and that the FU and the SFU on the secondary integrated main control board are in a normal working state, a forwarding drive subsystem of the MCU on the primary integrated main control board sends, to a corresponding hardware forwarding unit, mirror data that is of a hardware forwarding unit on the another integrated main control board and that is pre-stored in a hardware mirror database for hardware configuration data, and switches a chip status of the hardware forwarding unit on the another integrated main control board to a real chip state.

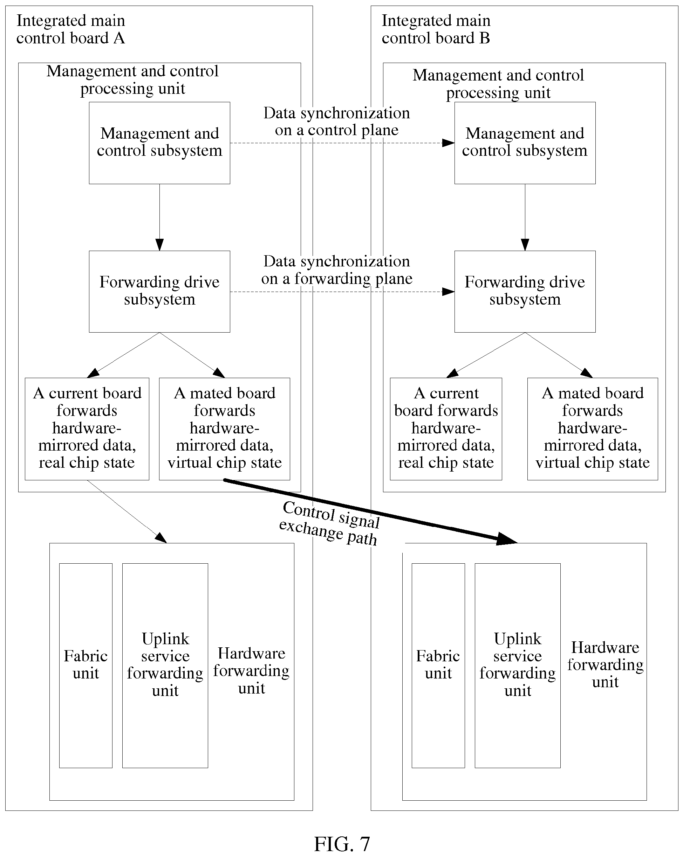

Further, if the MCU on the secondary integrated main control board restores to a normal working state, for example, a reset or an ISSU process is completed, the MCU on the secondary integrated main control board may control the FU and the SFU on the secondary integrated main control board again. However, before the MCU on the secondary integrated main control board controls the FU and the SFU on the secondary integrated main control board again, data synchronization on the control plane and data synchronization on the forwarding plane need to be completed between the primary integrated main control board and the secondary integrated main control board need to be completed. In a process of performing data synchronization on the control plane and on the forwarding plane between the primary integrated main control board and the secondary integrated main control board, the MCU on the primary integrated main control board still needs to control the FU and the SFU on the secondary integrated main control board. FIG. 7 is a schematic diagram of a working status in a process of performing data synchronization between the primary integrated main control board and the secondary integrated main control board.

It should be noted that, in FIG. 6 and FIG. 7, an example in which the MCU on the secondary integrated main control board encounters a fault is used for description. When the MCU on the primary integrated main control board encounters a fault, a switch between the primary integrated main control board and the secondary integrated main control board may be first performed, and after the switch between the primary integrated main control board and the secondary integrated main control board is performed, processing may be then performed according to the processing manner in the foregoing embodiment. Details are not described herein again.

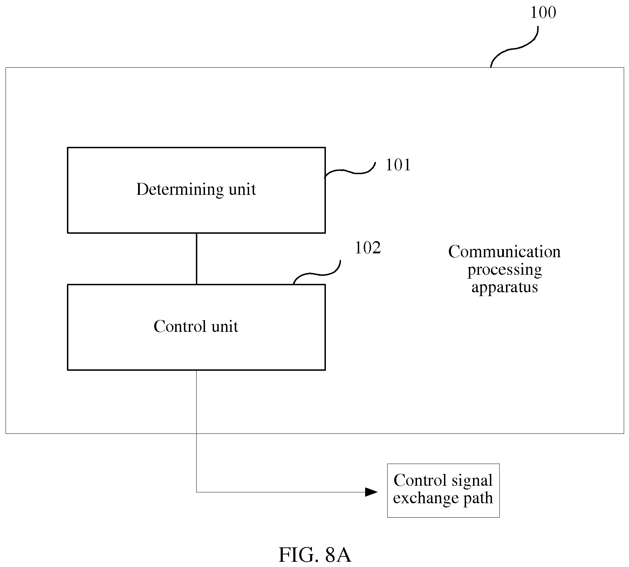

Based on the communication processing method provided in the foregoing embodiment, an embodiment of the present invention further provides a communication processing apparatus 100. The communication processing apparatus 100 is applied to an integrated main control board. FIG. 8A is a schematic structural diagram of the communication processing apparatus 100 provided in this embodiment of the present invention. As shown in FIG. 8A, the communication processing apparatus 100 includes a determining unit 101 and a control unit 102. The determining unit 101 is configured to determine that an FU and an SFU on another integrated main control board different from the integrated main control board need to be controlled. The control unit 102 is configured to: when the determining unit 101 determines that the FU and the SFU on the another integrated main control board different from the integrated main control board need to be controlled, control the FU and the SFU on the another integrated main control board different from the integrated main control board by using a control signal exchange path. The control signal exchange path is provided between the MCU on the integrated main control board and a hardware forwarding unit on the another integrated main control board different from the integrated main control board, and the hardware forwarding unit includes the FU and the SFU.

Specifically, the determining unit 101 may be configured to: detect running statuses of an MCU, the FU, and the SFU integrated on the another integrated main control board; and when detecting that the MCU on the another integrated main control board is in a fault state, and that at least one of the FU or the SFU is in a normal working state, determine, that the FU and the SFU that are integrated on the another integrated main control board and that are in the normal working state need to be controlled.

Optionally, the control unit 102 may be configured to: control, by using the control signal exchange path, the FU and the SFU on the another integrated main control board different from the integrated main control board to clear original hardware configuration data; and send, by using the control signal exchange path, pre-stored hardware configuration data to the FU and the SFU on the another integrated main control board different from the integrated main control board. The pre-stored hardware configuration data is hardware configuration data of the FU and the SFU on the another integrated main control board different from the integrated main control board.

Specifically, the control unit 102 may alternatively control the FU and the SFU that are integrated on the another integrated main control board and that are in the normal working state by using the control signal exchange path in the following manner, including:
obtaining, by using the control signal exchange path, original hardware configuration data of the FU and the SFU that are integrated on the another integrated main control board and that are in the normal working state; performing consistency verification on pre-stored hardware configuration data and the original hardware configuration data; and
updating original hardware configuration data different from the pre-stored hardware configuration data with reference to the pre-stored hardware configuration data. The pre-stored hardware configuration data is hardware configuration data of the FU and the SFU that are integrated on the another integrated main control board.

Optionally, the control unit 102 is further configured to:
before controlling the FU and the SFU on the another integrated main control board different from the integrated main control board by using the control signal exchange path, configure a selector on the another integrated main control board different from the integrated main control board, to choose to control, by using the control signal exchange path, the FU and the SFU on the another integrated main control board different from the integrated main control board.

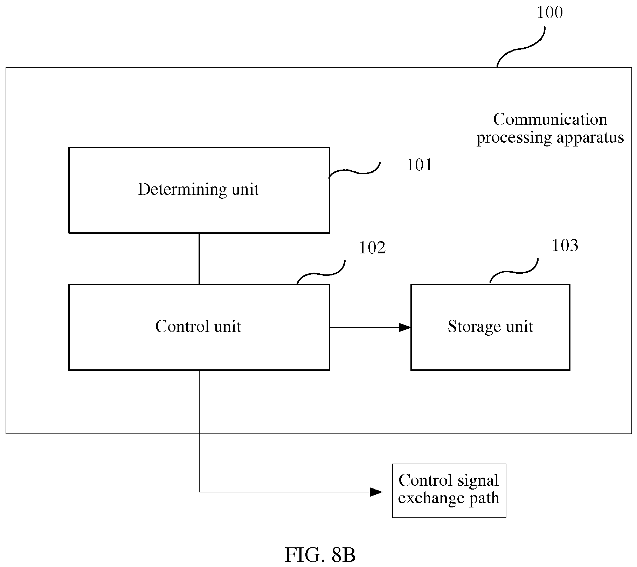

Optionally, the communication processing apparatus 100 may further include a storage unit 103. As shown in FIG. 8B, the storage unit 103 is configured to pre-store, in a form of a mirror table, the hardware configuration data of the FU and the SFU that are on the another integrated main control board.

The communication processing apparatus 100 provided in this embodiment of the present invention may be configured to perform the communication processing method in the foregoing embodiment, for example, the communication processing processes shown in FIG. 4 to FIG. 7, and has corresponding functions. For a part of the communication processing apparatus 100 that is not described in detail, refer to related descriptions in the method embodiment, and details are not described herein again.

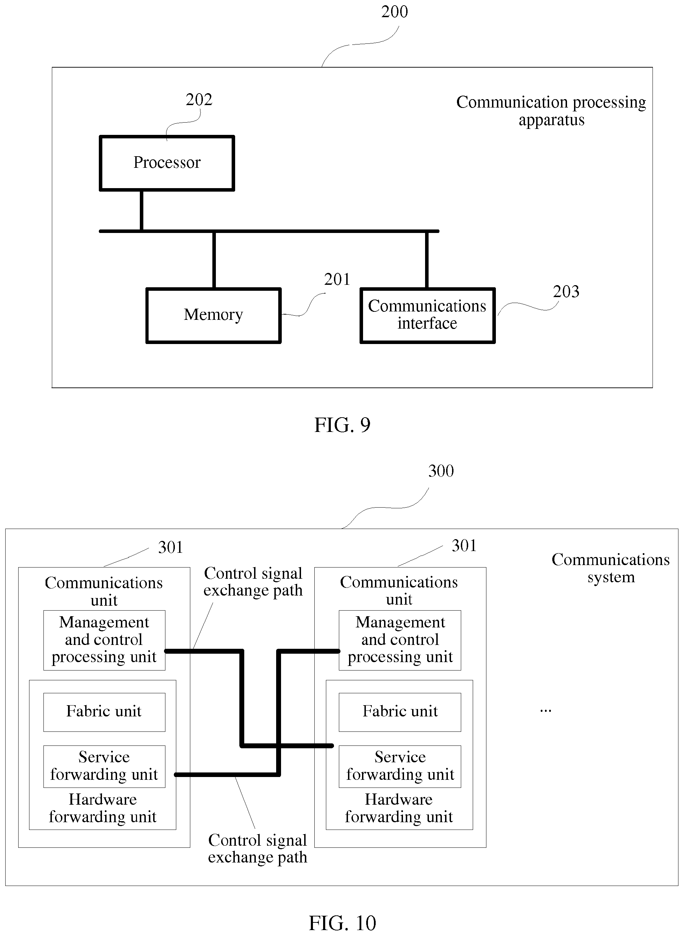

An embodiment of the present invention further provides a communication processing apparatus 200, applied to an integrated main control board. FIG. 9 is a schematic composition diagram of the communication processing apparatus 200 provided in this embodiment of the present invention. As shown in FIG. 9, the communication processing apparatus 200 includes a bus, a memory 201, a processor 202, and a communications interface 203. Program code for executing the solution of the present invention is stored in the memory 201, and is controlled and executed by the processor 202. The bus may include a path, and is configured to transfer information between various components of a computer.

The processor 202 may be a general-purpose central processing unit (CPU), a microprocessor, an application-specific integrated circuit (ASIC), or one or more integrated circuits configured to control execution of a program of the solution of the present invention. A computer system includes one or more memories, which may be a read-only memory (ROM) or another type of static storage device that may store static information and instructions, a random access memory (RAM) or another type of dynamic storage device that may store information and instructions, or a magnetic disk memory. These memories are connected to the processor by using the bus.

The communications interface 203 may be configured to communicate with another device or a communications network by using any apparatus such as a transceiver.

The memory 201 such as a RAM stores an operating system and a program for executing the solution of the present invention. The operating system is a program used to control running of another program and manage system resources.

The program stored in the memory 201 is used to instruct the processor 202 to perform a communication processing method, including: determining that an FU and an SFU on another integrated main control board need to be controlled; and controlling the FU and the SFU on the another integrated main control board different from the integrated main control board by using a control signal exchange path.

It may be understood that, the communication processing apparatus 200 in this embodiment may be configured to implement all functions in the foregoing method embodiment. For a specific implementation process thereof, refer to related descriptions in the foregoing method embodiment. Details are not described herein again.

An embodiment of the present invention further provides a computer storage medium, configured to store a computer software instruction used by the communication processing apparatus, including a related program used to implement the foregoing method embodiment. A corresponding communication processing method is performed by executing the stored program.

An embodiment of the present invention further provides a communications system 300. FIG. 10 is a schematic composition diagram of the communications system according to this embodiment of the present invention. The communications system 300 shown in FIG. 10 includes at least two communications units 301, each communications unit 301 includes an MCU and a hardware forwarding unit, and the hardware forwarding unit includes an FU and an SFU.

A control signal exchange path is provided between the MCU on each communications unit and a hardware forwarding unit on another communications unit in the at least two communications units. An MCU on any one of the at least two communications units controls an FU and an SFU on the another communications unit in the at least two communications units by using the control signal exchange path.

It may be understood that, the communications unit included in the communications system in this embodiment of the present invention may be the integrated main control board in the communications device in the foregoing embodiment of the present invention, and has related functions. Therefore, for a structure and a function of each communications unit in this embodiment of the present invention, refer to related descriptions of the communications device and the communication processing method in the foregoing embodiments. Details are not described herein again.

A person of ordinary skill in the art may understand that all or some of the steps in each of the foregoing method of the embodiments may be implemented by a program instructing a processor. The foregoing program may be stored in a computer readable storage medium. The storage medium may be a non-transitory medium, such as a random-access memory, a read-only memory, a flash memory, a hard disk, a solid state drive, a magnetic tape (English: magnetic tape), a floppy disk (English: floppy disk), an optical disc (English: optical disc), or any combination thereof.

The present invention is described with reference to flowcharts and block diagrams of the method and the device in the embodiments of the present invention. It should be understood that, computer program instructions may be used to implement each process and each block in the flowcharts and the block diagrams and a combination of a process and a block in the flowcharts and the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts or in one or more blocks in the block diagrams.

The foregoing descriptions are merely example implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method to be performed in a communication device, the communication device comprising at least a first integrated main control board and a second integrated main control board, each integrated main control board comprising a management and control processing unit, MCU, and a hardware forwarding unit, HFU, wherein the management and control processing unit comprises a determining unit and a control unit, and the hardware forwarding unit comprises a fabric unit, FU, and a service forwarding unit, SFU, and is configured to forward a service packet, and wherein a control signal exchange path is provided between the MCU in the first integrated main control board and the HFU in the second integrated main control board, and the method comprising:
determining (S101), by the MCU in the first integrated main control board, whether the FU and the SFU in the second integrated main control board need to be controlled, and when the FU and the SFU in the second integrated main control board need to be controlled, connecting, by the MCU in the first integrated main control board, the control signal path between the MCU in the first integrated main control board and the HFU in the second integrated main control board; and
controlling (S102), by the MCU in the first integrated main control board, the FU and the SFU in the second integrated main control board using the connected control signal exchange path and the FU and SFU integrated in the first integrated main control board.

2. The method according to claim 1, controlling, by the MCU in the first integrated main control board, the FU and the SFU in the second integrated main control board using the connected control signal exchange path comprises:
controlling, by the MCU in the first integrated main control board, by using the connected control signal exchange path, the FU and the SFU in the second integrated main control board to clear original hardware configuration data; and
sending, by the MCU in the first integrated main control board, by using the connected control signal exchange path, pre-stored hardware configuration data to the FU and the SFU in the second integrated main control board, wherein
the pre-stored hardware configuration data is hardware configuration data of the FU and the SFU in the second integrated main control board.

3. The method according to claim 1, controlling, by the MCU in the first integrated main control board, the FU and the SFU in the second integrated main control board using the connected control signal exchange path comprises:
obtaining, by the MCU in the first integrated main control board, by using the connected control signal exchange path, original hardware configuration data of the FU and the SFU in the second integrated main control board; and
performing, by the MCU in the first integrated main control board, consistency verification on pre-stored hardware configuration data and the original hardware configuration data, and update original hardware configuration data different from the pre-stored hardware configuration data with reference to the pre-stored hardware configuration data, wherein
the pre-stored hardware configuration data is hardware configuration data of the FU and the SFU in the second integrated main control board.

4. The method according to claim 2 or 3, wherein the MCU in the first integrated main control board pre-stores, in a form of a mirror table, the hardware configuration data of the FU and the SFU in the second integrated main control board.

5. The method according to any one of claims 1 to 4, wherein before controlling the FU and the SFU in the second integrated main control board, the method further comprises configuring, by the MCU in the first integrated main control board, a selector on the second integrated main control board, to choose to control, by using the control signal exchange path, the FU and the SFU on the second integrated main control board.

6. The method according to any one of claims 1 to 5, wherein the FU and the SFU in the second integrated main control board need to be controlled when the MCU on the second integrated main control board is in an abnormal working state, and at least one of the FU or the SFU on the second integrated main control board is in a normal working state.

7. A communication device, the communication device comprising at least a first integrated main control board and a second integrated main control board, each integrated main control board comprising a management and control processing unit, MCU, and a hardware forwarding unit, HFU, wherein the management and control processing unit comprises a determining unit and a control unit, and the hardware forwarding unit comprises a fabric unit, FU, and a service forwarding unit, SFU, and is configured to forward a service packet, and wherein a control signal exchange path is provided between the MCU in the first integrated main control board and the HFU in the second integrated main control board, and wherein
the determining unit in the first integrated main control board is configured to determine whether the FU and the SFU in the second integrated main control board need to be controlled, and when the FU and the SFU in the second integrated main control board need to be controlled, connect the control signal path between the MCU in the first integrated main control board and the HFU in the second integrated main control board; and
the control unit in the first integrated main control board is configured to control the FU and the SFU in the second integrated main control board using the connected control signal exchange path and to control the FU and SFU integrated in the first integrated main control board.

8. The device according to claim 7, wherein the control unit is specifically configured to :
control, by using the connected control signal exchange path, the FU and the SFU in the second integrated main control board to clear original hardware configuration data; and
send, by using the connected control signal exchange path, pre-stored hardware configuration data to the FU and the SFU in the second integrated main control board, wherein
the pre-stored hardware configuration data is hardware configuration data of the FU and the SFU in the second integrated main control board.

9. The device according to claim 7, wherein the control unit is specifically configured to:
obtain, by using the connected control signal exchange path, original hardware configuration data of the FU and the SFU in the second integrated main control board; and
perform consistency verification on pre-stored hardware configuration data and the original hardware configuration data, and update original hardware configuration data different from the pre-stored hardware configuration data with reference to the pre-stored hardware configuration data, wherein
the pre-stored hardware configuration data is hardware configuration data of the FU and the SFU in the second integrated main control board.

10. The device according to claim 8 or 9, wherein the MCU further comprises a storage unit, wherein
the storage unit is configured to pre-store, in a form of a mirror table, the hardware configuration data of the FU and the SFU in the second integrated main control board.

11. The device according to any one of claims 7 to 10, wherein the control unit is further configured to:
before controlling the FU and the SFU in the second integrated main control board, configure a selector on the second integrated main control board, to choose to control, by using the control signal exchange path, the FU and the SFU on the second integrated main control board.

12. The device according to any one of claims 7 to 11, wherein the FU and the SFU in the second integrated main control board need to be controlled when the MCU on the second integrated main control board is in an abnormal working state, and at least one of the FU or the SFU on the second integrated main control board is in a normal working state

## Patentansprüche

1. Kommunikationsverfahren, das in einer Kommunikationseinrichtung durchzuführen ist, wobei die Kommunikationseinrichtung zumindest eine erste integrierte Hauptsteuerplatine und eine zweite integrierte Hauptsteuerplatine umfasst, wobei jede integrierte Hauptsteuerplatine eine Verwaltungs- und Steuerungsverarbeitungseinheit bzw. MCU und eine Hardwareweiterleitungseinheit bzw. HFU umfasst, wobei die Verwaltungs- und Steuerungsverarbeitungseinheit eine Bestimmungseinheit und eine Steuereinheit umfasst und die Hardwareweiterleitungseinheit eine "Fabric"-Einheit bzw. FU und eine Dienstweiterleitungseinheit bzw. SFU umfasst und ausgelegt ist zum Weiterleiten eines Dienstpakets, und wobei ein Steuersignalaustauschpfad zwischen der MCU in der ersten integrierten Hauptsteuerplatine und der HFU in der zweiten integrierten Hauptsteuerplatine bereitgestellt ist, und wobei das Verfahren Folgendes umfasst:
Bestimmen (S101), durch die MCU in der ersten integrierten Hauptsteuerplatine, ob die FU und die SFU in der zweiten integrierten Hauptsteuerplatine gesteuert werden müssen, und wenn die FU und die SFU in der zweiten integrierten Hauptsteuerplatine gesteuert werden müssen, Verbinden, durch die MCU in der ersten integrierten Hauptsteuerplatine, des Steuersignalpfads zwischen der MCU in der ersten integrierten Hauptsteuerplatine und der HFU in der zweiten integrierten Hauptsteuerplatine; und
Steuern (S102), durch die MCU in der ersten integrierten Hauptsteuerplatine, der FU und der SFU in der zweiten integrierten Hauptsteuerplatine unter Verwendung des verbundenen Steuersignalaustauschpfads und der FU und der SFU, die in der ersten integrierten Hauptsteuerplatine integriert sind.

2. Verfahren nach Anspruch 1, wobei das Steuern, durch die MCU in der ersten integrierten Hauptsteuerplatine, der FU und der SFU in der zweiten integrierten Hauptsteuerplatine unter Verwendung des verbundenen Steuersignalaustauschpfads, Folgendes umfasst:
Steuern, durch die MCU in der ersten integrierten Hauptsteuerplatine, unter Verwendung des verbundenen Steuersignalaustauschpfads, der FU und der SFU in der zweiten integrierten Hauptsteuerplatine, um ursprüngliche Hardwarekonfigurationsdaten zu löschen; und
Senden, durch die MCU in der ersten integrierten Hauptsteuerplatine, unter Verwendung des verbundenen Steuersignalaustauschpfads, von zuvor gespeicherten Hardwarekonfigurationsdaten zu der FU und der SFU in der zweiten integrierten Hauptsteuerplatine, wobei
die zuvor gespeicherten Hardwarekonfigurationsdaten Hardwarekonfigurationsdaten der FU und der SFU in der zweiten integrierten Hauptsteuerplatine sind.

3. Verfahren nach Anspruch 1, wobei das Steuern, durch die MCU in der ersten integrierten Hauptsteuerplatine, der FU und der SFU in der zweiten integrierten Hauptsteuerplatine unter Verwendung des verbundenen Steuersignalaustauschpfads, Folgendes umfasst:
Erhalten, durch die MCU in der ersten integrierten Hauptsteuerplatine, unter Verwendung des verbundenen Steuersignalaustauschpfads, von ursprünglichen Hardwarekonfigurationsdaten der FU und der SFU in der zweiten integrierten Hauptsteuerplatine; und
Durchführen, durch die MCU in der ersten integrierten Hauptsteuerplatine, einer Konsistenzverifizierung an zuvor gespeicherten Hardwarekonfigurationsdaten und den ursprünglichen Hardwarekonfigurationsdaten und Aktualisieren von ursprünglichen Hardwarekonfigurationsdaten, die sich von den zuvor gespeicherten Hardwarekonfigurationsdaten unterscheiden, mit Bezug auf die zuvor gespeicherten Hardwarekonfigurationsdaten, wobei
die zuvor gespeicherten Hardwarekonfigurationsdaten Hardwarekonfigurationsdaten der FU und der SFU in der zweiten integrierten Hauptsteuerplatine sind.

4. Verfahren nach Anspruch 2 oder 3, wobei die MCU in der ersten integrierten Hauptsteuerplatine die Hardwarekonfigurationsdaten der FU und der SFU in der zweiten integrierten Hauptsteuerplatine in Form einer Spiegeltabelle vorspeichert.

5. Verfahren nach einem der Ansprüche 1 bis 4, wobei das Verfahren vor dem Steuern der FU und der SFU in der zweiten integrierten Hauptsteuerplatine ferner umfasst:
Konfigurieren, durch die MCU in der ersten integrierten Hauptsteuerplatine, eines Selektors auf der zweiten integrierten Hauptsteuerplatine, zu wählen, die FU und die SFU auf der zweiten integrierten Hauptsteuerplatine zu steuern.

6. Verfahren nach einem der Ansprüche 1 bis 5, wobei die FU und die SFU in der zweiten integrierten Hauptsteuerplatine gesteuert werden müssen, wenn sich die MCU auf der zweiten integrierten Hauptsteuerplatine in einem anormalen Arbeitszustand befindet und sich die FU und/oder die SFU auf der zweiten integrierten Hauptsteuerplatine in einem normalen Arbeitszustand befinden.

7. Kommunikationseinrichtung, wobei die Kommunikationseinrichtung zumindest eine erste integrierte Hauptsteuerplatine und eine zweite integrierte Hauptsteuerplatine umfasst, wobei jede integrierte Hauptsteuerplatine eine Verwaltungs- und Steuerungsverarbeitungseinheit bzw. MCU und eine Hardwareweiterleitungseinheit bzw. HFU umfasst, wobei die Verwaltungs- und Steuerungsverarbeitungseinheit eine Bestimmungseinheit und eine Steuereinheit umfasst und die Hardwareweiterleitungseinheit eine "Fabric"-Einheit bzw. FU und eine Dienstweiterleitungseinheit bzw. SFU umfasst und ausgelegt ist zum Weiterleiten eines Dienstpakets, und wobei ein Steuersignalaustauschpfad zwischen der MCU in der ersten integrierten Hauptsteuerplatine und der HFU in der zweiten integrierten Hauptsteuerplatine bereitgestellt ist, und wobei
die Bestimmungseinheit in der ersten integrierten Hauptsteuerplatine ausgelegt ist zum Bestimmen, ob die FU und die SFU in der zweiten integrierten Hauptsteuerplatine gesteuert werden müssen, und wenn die FU und die SFU in der zweiten integrierten Hauptsteuerplatine gesteuert werden müssen, Verbinden des Steuersignalpfads zwischen der MCU in der ersten integrierten Hauptsteuerplatine und der HFU in der zweiten integrierten Hauptsteuerplatine; und
die Steuereinheit in der ersten integrierten Hauptsteuerplatine ausgelegt ist zum Steuern der FU und der SFU in der zweiten integrierten Hauptsteuerplatine unter Verwendung des verbundenen Steuersignalaustauschpfads und Steuern der FU und der SFU, die in der ersten integrierten Hauptsteuerplatine integriert sind.

8. Einrichtung nach Anspruch 7, wobei die Steuereinheit spezifisch ausgelegt ist zum:
Steuern, unter Verwendung des verbundenen Steuersignalaustauschpfads, der FU und der SFU in der zweiten integrierten Hauptsteuerplatine, um ursprüngliche Hardwarekonfigurationsdaten zu löschen; und
Senden, unter Verwendung des verbundenen Steuersignalaustauschpfads, von zuvor gespeicherten Hardwarekonfigurationsdaten zu der FU und der SFU in der zweiten integrierten Hauptsteuerplatine, wobei
die zuvor gespeicherten Hardwarekonfigurationsdaten Hardwarekonfigurationsdaten der FU und der SFU in der zweiten integrierten Hauptsteuerplatine sind.

9. Einrichtung nach Anspruch 7, wobei die Steuereinheit spezifisch ausgelegt ist zum:
Erhalten, unter Verwendung des verbundenen Steuersignalaustauschpfads, von ursprünglichen Hardwarekonfigurationsdaten der FU und der SFU in der zweiten integrierten Hauptsteuerplatine; und
Durchführen einer Konsistenzverifizierung an zuvor gespeicherten Hardwarekonfigurationsdaten und den ursprünglichen Hardwarekonfigurationsdaten und Aktualisieren von ursprünglichen Hardwarekonfigurationsdaten, die sich von den zuvor gespeicherten Hardwarekonfigurationsdaten unterscheiden, mit Bezug auf die zuvor gespeicherten Hardwarekonfigurationsdaten, wobei die zuvor gespeicherten Hardwarekonfigurationsdaten Hardwarekonfigurationsdaten der FU und der SFU in der zweiten integrierten Hauptsteuerplatine sind.

10. Einrichtung nach Anspruch 8 oder 9, wobei die MCU ferner eine Speichereinheit umfasst, wobei
die Speichereinheit ausgelegt ist zum Vorspeichern der Hardwarekonfigurationsdaten der FU und der SFU in der zweiten integrierten Hauptsteuerplatine in Form einer Spiegeltabelle.

11. Einrichtung nach einem der Ansprüche 7 bis 10, wobei die Steuereinheit ferner ausgelegt ist zum:
vor dem Steuern der FU und der SFU in der zweiten integrierten Hauptsteuerplatine, Konfigurieren eines Selektors auf der zweiten integrierten Hauptsteuerplatine, zu wählen, unter Verwendung des Steuersignalaustauschpfads, die FU und die SFU auf der zweiten integrierten Hauptsteuerplatine zu steuern.

12. Einrichtung nach einem der Ansprüche 7 bis 11, wobei die FU und die SFU in der zweiten integrierten Hauptsteuerplatine gesteuert werden müssen, wenn sich die MCU auf der zweiten integrierten Hauptsteuerplatine in einem anormalen Arbeitszustand befindet und sich die FU und/oder die SFU auf der zweiten integrierten Hauptsteuerplatine in einem normalen Arbeitszustand befinden.

## Revendications

1. Procédé de communication à mettre en œuvre dans un dispositif de communication, le dispositif de communication comprenant au moins une première carte de commande principale intégrée et une seconde carte de commande principale intégrée, chaque carte de commande principale intégrée comprenant une unité de traitement de commande et de gestion, MCU, et une unité de transmission de matériel, HFU, l'unité de traitement de commande et de gestion comprenant une unité de détermination et une unité de commande, et l'unité de transmission de matériel comprenant une unité matricielle, FU, et une unité de transmission de services, SFU, et étant conçue pour transmettre un paquet de services, et un trajet d'échange de signal de commande étant prévu entre la MCU dans la première carte de commande principale intégrée et la HFU dans la seconde carte de commande principale intégrée, et le procédé comprenant :
la détermination (S101), par la MCU dans la première carte de commande principale intégrée, pour savoir si la FU et la SFU dans la seconde carte de commande principale intégrée doivent être commandées, et lorsque la FU et la SFU dans la seconde carte de commande principale intégrée doivent être commandées, connecter, par la MCU dans la première carte de commande principale intégrée, le trajet de signal de commande entre la MCU dans la première carte de commande principale intégrée et la HFU dans la seconde carte de commande principale intégrée ; et
la commande (S102), par la MCU dans la première carte de commande principale intégrée, de la FU et de la SFU dans la seconde carte de commande principale intégrée en utilisant le trajet d'échange de signal de commande connecté, et la FU et la SFU intégrées dans la première carte de commande principale intégrée.

2. Procédé selon la revendication 1, dans lequel commander, par la MCU dans la première carte de commande principale intégrée, la FU et la SFU dans la seconde carte de commande principale intégrée en utilisant le trajet d'échange de signal de commande connecté comprend :
la commande, par la MCU dans la première carte de commande principale intégrée, en utilisant le trajet d'échange de signal de commande connecté, de la FU et de la SFU dans la seconde carte de commande principale intégrée en vue de supprimer des données de configuration de matériel originales ; et
l'envoi, par la MCU dans la première carte de commande principale intégrée, en utilisant le trajet d'échange de signal de commande connecté, des données de configuration de matériel pré-stockées à la FU et à la SFU dans la seconde carte de commande principale intégrée, dans lequel
les données de configuration de matériel pré-stockées sont des données de configuration de matériel de la FU et la SFU dans la seconde carte de commande principale intégrée.

3. Procédé selon la revendication 1, dans lequel commander, par la MCU dans la première carte de commande principale intégrée, la FU et la SFU dans la seconde carte de commande principale intégrée en utilisant le trajet d'échange de signal de commande connecté comprend :
l'obtention, par la MCU dans la première carte de commande principale intégrée, en utilisant le trajet d'échange de signal de commande connecté, des données de configuration de matériel originales de la FU et de la SFU dans la seconde carte de commande principale intégrée ; et
l'exécution, par la MCU dans la première carte de commande principale intégrée, d'une vérification de cohérence sur les données de configuration de matériel pré-stockées et les données de configuration de matériel originales, et mettre à jour des données de configuration de matériel originales différentes des données de configuration de matériel pré-stockées en référence aux données de configuration de matériel pré-stockées, dans lequel
les données de configuration de matériel pré-stockées sont des données de configuration de matériel de la FU et de la SFU dans la seconde carte de commande principale intégrée.

4. Procédé selon la revendication 2 ou 3, dans lequel la MCU dans la première carte de commande principale intégrée pré-stocke, sous la forme d'une table miroir, les données de configuration de matériel de la FU et de la SFU dans la seconde carte de commande principale intégrée.

5. Procédé selon l'une quelconque des revendications 1 à 4, dans lequel avant de commander la FU et la SFU dans la seconde carte de commande principale intégrée, le procédé consiste en outre à configurer, par la MCU dans la première carte de commande principale intégrée, un sélecteur sur la seconde carte de commande principale intégrée, pour choisir de commander, en utilisant le trajet d'échange de signal de commande, la FU et la SFU sur la seconde carte de commande principale intégrée.

6. Procédé selon l'une quelconque des revendications 1 à 5, dans lequel la FU et la SFU dans la seconde carte de commande principale intégrée doivent être commandées lorsque la MCU sur la seconde carte de commande principale intégrée se trouve dans un état de fonctionnement anormal, et au moins une de la FU ou de la SFU sur la seconde carte de commande principale intégrée se trouve dans un état de fonctionnement normal.

7. Dispositif de communication, le dispositif de communication comprenant au moins une première carte de commande principale intégrée et une seconde carte de commande principale intégrée, chaque carte de commande principale intégrée comprenant une unité de traitement de commande et de gestion, MCU, et une unité de transmission de matériel, HFU, l'unité de traitement de commande et de gestion comprenant une unité de détermination et une unité de commande, et l'unité de transmission de matériel comprenant une unité matricielle, FU, et une unité de transmission de services, SFU, et étant conçue pour transférer un paquet de services, et un trajet d'échange de signal de commande étant prévu entre la MCU dans la première carte de commande principale intégrée et la HFU dans la seconde carte de commande principale intégrée, et dans lequel
l'unité de détermination dans la première carte de commande principale intégrée est conçue pour déterminer si la FU et la SFU dans la seconde carte de commande principale intégrée doivent être commandées, et lorsque la FU et la SFU dans la seconde carte de commande principale intégrée doivent être commandées, connecter le trajet de signal de commande entre la MCU dans la première carte de commande principale intégrée et la HFU dans la seconde carte de commande principale intégrée ; et
l'unité de commande dans la première carte de commande principale intégrée est conçue pour commander la FU et la SFU dans la seconde carte de commande principale intégrée en utilisant le trajet d'échange de signal de commande connecté et pour commander la FU et la SFU intégrées dans la première carte de commande principale intégrée.

8. Dispositif selon la revendication 7, dans lequel l'unité de commande est conçue spécifiquement pour :
commander, en utilisant le trajet d'échange de signal de commande connecté, la FU et la SFU dans la seconde carte de commande principale intégrée en vue de supprimer des données de configuration de matériel originales ; et
envoyer, en utilisant le trajet d'échange de signal de commande connecté, des données de configuration de matériel pré-stockées à la FU et à la SFU dans la seconde carte de commande principale intégrée, dans lequel
les données de configuration de matériel pré-stockées sont des données de configuration de matériel de la FU et de la SFU dans la seconde carte de commande principale intégrée.

9. Dispositif selon la revendication 7, dans lequel l'unité de commande est conçue spécifiquement pour :
obtenir, en utilisant le trajet d'échange de signal de commande connecté, des données de configuration de matériel originales de la FU et de la SFU dans la seconde carte de commande principale intégrée ; et
exécuter une vérification de cohérence sur les données de configuration de matériel pré-stockées et les données de configuration de matériel originales, et mettre à jour des données de configuration de matériel originales différentes des données de configuration de matériel pré-stockées en référence aux données de configuration de matériel pré-stockées, dans lequel
les données de configuration de matériel pré-stockées sont des données de configuration de matériel de la FU et de la SFU dans la seconde carte de commande principale intégrée.

10. Dispositif selon la revendication 8 ou 9, dans lequel la MCU comprend en outre une unité de stockage, dans lequel
l'unité de stockage étant conçue pour pré-stocker, sous la forme d'une table miroir, les données de configuration de matériel de la FU et de la SFU dans la seconde carte de commande principale intégrée.

11. Dispositif selon l'une quelconque des revendications 7 à 10, dans lequel l'unité de commande est conçue en outre pour :
avant de commander la FU et la SFU dans la seconde carte de commande principale intégrée, configurer un sélecteur sur la seconde carte de commande principale intégrée, pour choisir de commander, en utilisant le trajet d'échange de signal de commande, la FU et la SFU sur la seconde carte de commande principale intégrée.

12. Dispositif selon l'une quelconque des revendications 7 à 11, dans lequel la FU et la SFU dans la seconde carte de commande principale intégrée doivent être commandées lorsque la MCU sur la seconde carte de commande principale intégrée se trouve dans un état de fonctionnement anormal, et au moins une de la FU ou de la SFU sur la seconde carte de commande principale intégrée se trouve dans un état de fonctionnement normal.
